# EUROPEAN PATENT SPECIFICATION

(11) **EP 4 159 421 B1**
(45) Date of publication and mention of the grant of the patent: **04.12.2024**
(21) Application number: 22199343.9
(22) Date of filing: 03.10.2022
(51) Int. Cl.: B29C 73/02, B29C 73/30, B64F 5/40, B64F 5/10, B64F 5/60

(54) **REINFORCING A JUNCTION IN A FIBER-COMPOSITE CONDUIT**
VERSTÄRKUNG EINER VERBINDUNG IN EINEM FASERVERBUNDROHR
RENFORCEMENT D'UNE JONCTION DANS UN CONDUIT EN COMPOSITE RENFORCÉ PAR DES FIBRES

(30) Priority: 04.10.2021 US 202117449933
(43) Date of publication of application: 05.04.2023
(73) Proprietor: The Boeing Company, Arlington, VA 22202 (US)
(72) Inventor: PIERCE, Evan, CHICAGO, 60606-2016 (US)
(74) Representative: Plasseraud IP

(56) References cited:
- EP-A1- 3 106 384
- WO-A1-2019/023512
- US-A1- 2019 032 632

## Description

### TECHNICAL FIELD

This disclosure relates generally to the field of fiber-composite component manufacture and more specifically to a method to reinforce a junction of one or more aircraft components, and to a tool for reinforcing a junction of one or more aircraft components.

### BACKGROUND

Aircraft can be made using lightweight materials in order to optimize performance and fuel economy. For some aircraft, such lightweight materials include fiber-composite materials, in which strong, lightweight fibers are immobilized in a cured resin matrix. Carbon fibers are especially suitable for fiber-composite airframe components. The technology for manufacture of fiber-composite airframe components is relatively new. Accordingly, there remain significant opportunities for improvement of the manufactured components-in terms of strength, weight, cost, *etc*.-and for improvement in the efficiency of manufacture.

EP 3 106 384 A1, in accordance with its abstract, states that a method of sealing an aircraft wing vent stringer may include placing a movable sealant sled in a vent stringer cavity of an aircraft wing. The sealant sled may include a sealant source configured to apply sealant to a wing portion within the vent stringer. The sealant sled may be transported through the cavity in a longitudinal direction defined by the wing, thereby applying a layer of sealant to the wing. In some cases, vent stringer may be abraded and/or washed before sealing. In some cases, two or more layers of sealant may be applied, one of which may be a secondary fuel barrier.

### SUMMARY

One aspect of this disclosure relates to a method to reinforce a junction of one or more aircraft components as defined in appended claim 1.

Another aspect of this disclosure relates to a tool for reinforcing a junction of one or more aircraft components, as defined in appended claim 9.

This Summary is not intended to identify key features or essential features of the claimed subject matter, nor is the scope of the claimed subject matter limited to implementations that address any problems or disadvantages noted in any part of this disclosure. The features, functions, and advantages described herein may be achieved independently in some implementations but may be combined in other implementations, within the scope of the appended claims.

### BRIEF DESCRIPTION OF THE DRAWINGS

This disclosure will be better understood from reading the following Detailed Description with reference to the attached drawing figures, wherein:
FIG. 1 shows aspects of an example aircraft;
FIG. 2 shows aspects of an example wing section of an aircraft;
FIGS. 3A and 3B show aspects of an example hat stringer;
FIG. 4 shows aspects of a system of tools and an associated method for reinforcing a junction of one or more aircraft components;
FIGS. 5A and 5B show aspects of an example tool for reinforcing a junction of one or more aircraft components;
FIGS. 6A and 6B show aspects of another example tool for reinforcing a junction of one or more aircraft components;
FIGS. 7A and 7B show aspects of another example tool for reinforcing a junction of one or more aircraft components;
FIGS. 8A and 8B show aspects of another example tool for reinforcing a junction of one or more aircraft components; and
FIG. 9 shows aspects of an example method for reinforcing a junction of one or more aircraft components.
FIGS. 10A through 10D show aspects of an example junction in four different stages of reinforcement according to the method of FIG. 9.

### DETAILED DESCRIPTION

An aircraft may include numerous stiffener members bonded to the aircraft skin and forming long, narrow conduits, with junctions between the bonded components. The stiffener members may comprise fiber-composite material, in some examples. This disclosure provides a series of solutions for reinforcing bonded junctions of fiber-composite material by application of a sealant. The overall approach relies on a system of one or more compact tools that travel down the conduit to enact a series of functions to achieve the reinforcement objective. Such functions include abrading and cleaning an area of incomplete or uneven bonding, applying the sealant, and inspecting the finished seal.

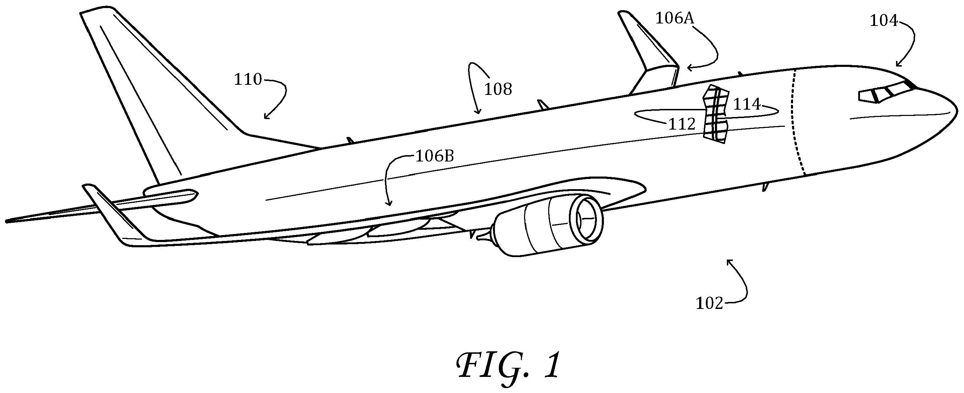

Turning now to the drawings, FIG. 1 shows aspects of an example aircraft 102. The aircraft includes, *inter alia,* a nose section 104, wing sections 106A and 106B, a fuselage section 108, and a tail section 110. Any or all of these aircraft sections may include a lightweight skin 112. Any or all of these aircraft sections may include a stiffener member 114, such as a stringer, spar, rib, and/or longeron. A stiffener member may be arranged beneath the skin, to increase the rigidity of the skin. In some examples, a stiffener member may comprise fiber-composite material. In some examples, the aircraft skin may comprise fiber-composite material. In some examples, the aircraft skin may comprise a light-weight metal, such as aluminum.

The compositions of the fiber-composite materials envisaged herein are not particularly limited. Example fiber-composite materials include carbon fibers immobilized in a polymer. The polymer may be thermosetting in some examples and thermoplastic in other examples. Example thermosetting polymer resins may include one or more of an epoxy-amine resin, a urethane resin, or an acrylamide resin. Such resins may be curable in air. Example thermoplastic polymers include polyetherether ketone (PEEK) and polyetherketoneketone (PEKK), among others.

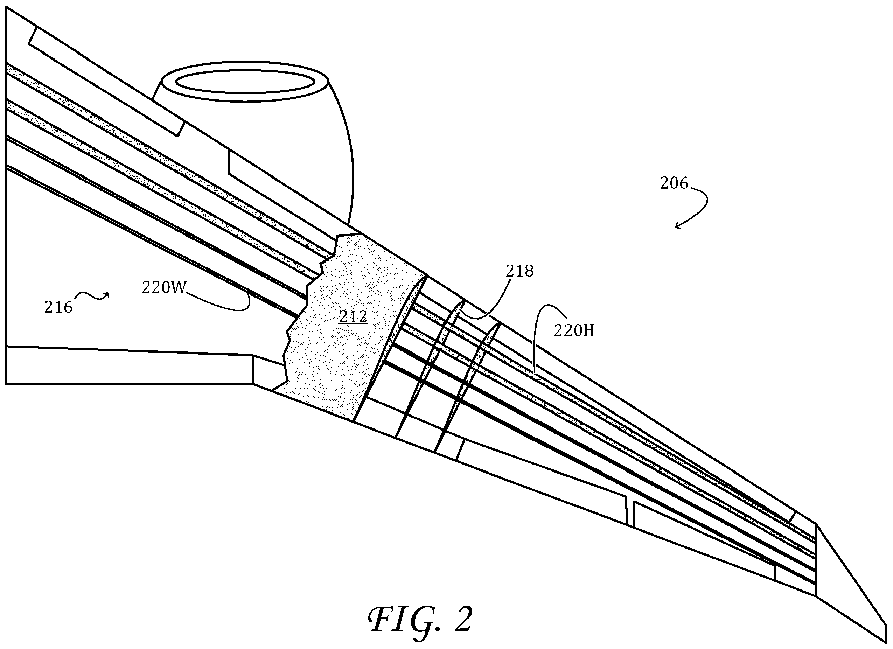

FIG. 2 shows aspects of an example wing section 206 of an aircraft. Fuel tank 216 is arranged within the wing section. Skin 212 follows the profile defined by ribs 218, and stringers 220 run the length of the wing, providing support for the ribs. FIG. 2 shows two types of stringers: web stringers 220W and hat stringers 220H. It will be understood that the configuration shown in FIG. 2 is simplified for clarity; an actual aircraft wing section can include many more ribs and stringers.

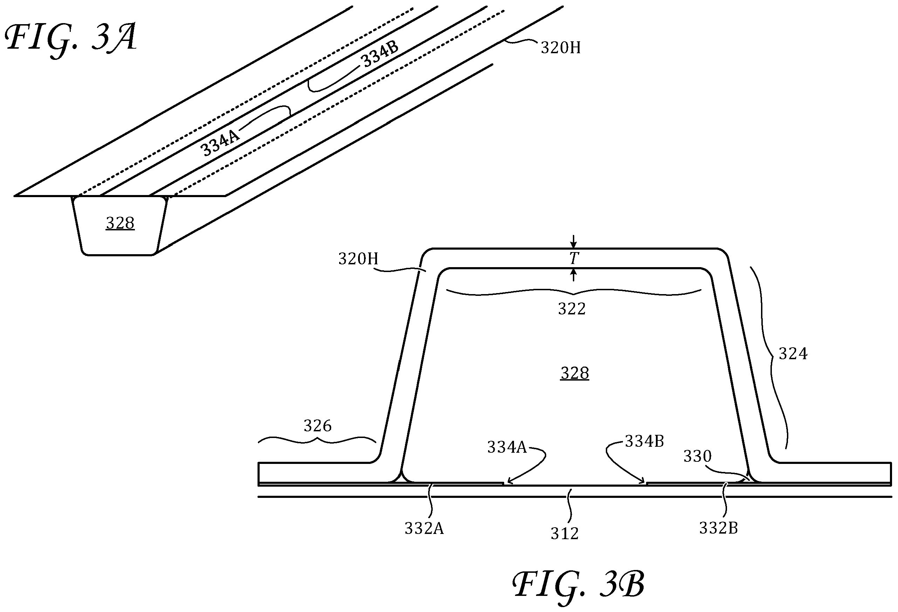

FIGS. 3A and 3B show additional aspects of an example hat stringer 320H. The hat stringer is so named because of its trapezoidal cross section. Nevertheless, this particular shape is not limiting in any sense. Hat stringer 320H is a carbon-fiber composite article; it includes cap region 322, web regions 324, and flange regions 326. In some examples, the wall thickness *T* of the hat stringer may be about 8 to 10 millimeters (mm), the web regions may be about 64 mm in height, and the cap region may be about 100 mm in width. It will be understood that this disclosure is equally applicable to hat stringers of other dimensions and shapes, and to stiffener members other than hat stringers.

Hat stringer 320 is bonded to skin 312 of an aircraft wing; it forms, in combination with the skin, an elongate, hollow conduit 328. Flange regions 326 enable bonding between the hat stringer and the skin. The bonding is primarily via an adhesive, such as a thermosetting adhesive polymer film. Examples include AF555 (a product of 3M of Saint Paul, Minnesota) or Metlbond 1515 (a product of Solvay of Brussels, Belgium). In the case of thermoplastic matrices, the bonding may be a function of the native matrix. Hardware fasteners (*e.g.,* steel bolts, not shown in the drawings) may also be used in selected locations. For improved resistance to mechanical stresses, conduit 328 includes radius filler 330-a curled or rolled segment of fiber-composite material arranged where skin 312 meets hat stringer 320H at an acute angle. Flange extensions 332 support the radius filler and provide an extended area of adhesive bonding between the hat stringer and the skin. In some examples, a flange extension includes at least two plies of a carbon fiber composite material, for a total thickness of about 16 mils (about 0.406 mm).

Any, some, or all of the conduits 328 in an aircraft wing section may accommodate cables (electrical, fiber-optic, mechanical, *etc*.), compressed-gas lines, and/or vacuum lines (not shown in the drawings). Any, some, or all of the conduits may provide passive pressure equalization across different portions or compartments of a wing section, including fuel-tank portions. It will be noted that the aircraft shown in FIGS. 1 and 2 has a wingspan of 35.9 meters and a length of 35.6 meters from nose to tail. Accordingly, certain components of the aircraft, including the hat stringers and corresponding conduits, may be commensurately long. A hat stringer may be over 30 meters in length in some examples. An advantage of the tools and methods here disclosed is that they can be used to reinforce conduits of any length.

Naturally, the structural integrity of an airframe depends on high-quality bonding among airframe components-*e.g*., between stiffener members and the aircraft skin. In certain scenarios, however, incomplete or uneven bonding may affect the arc discharge capability of the junction. For instance, when an aircraft is struck by lightning, arc discharge may occur around junctions of fiber-composite components that are not smoothly bonded. FIG. 3 shows two example junctions 334A and 334B between the aircraft skin and the flange extensions of conduit 328. These junctions are smoothly bonded as illustrated. If either junction was not smoothly bonded (*e.g.,* if flange extension 332A were lifted off of skin 312 to expose an air gap), then potential differences induced by a lightning strike could cause arc discharge across the air gap. Arc discharge inside an aircraft wing is generally undesirable. Without tying this disclosure to any particular theory, smooth bonding between components reduces the likelihood of arc discharge by (a) eliminating as many gaps as possible, and (b) filling the gaps that cannot be eliminated with cured adhesive-*i*.*e*., a solid having a much higher dielectric strength than air or any other gas within the wing.

Fortunately, technology for detailed imaging of junctions of fiber-composite aircraft components is available. For instance, sonography can be used to detect an area of incomplete or uneven bonding at junction 334, which could allow arc discharge in the event of a lightning strike. Nevertheless, even when such an area is located in conduit 328, the great length and narrow aperture of the conduit make it difficult to reinforce the junction. This disclosure provides a series of tools and methods to address that issue.

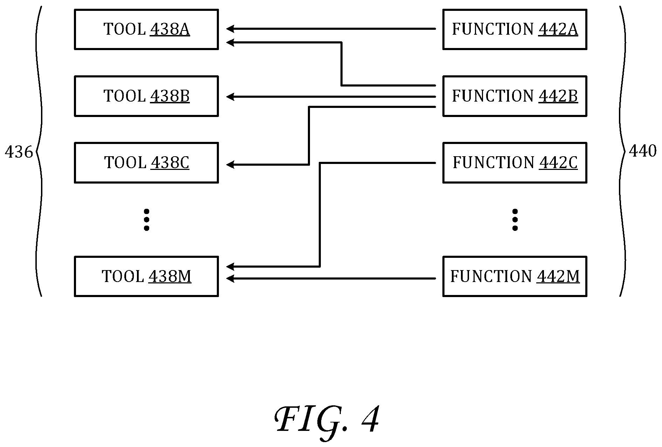

FIG. 4 is a high-level schematic diagram of a strategy for reinforcing a junction of one or more aircraft components, such components including fiber composite and forming an elongate conduit. FIG. 4 shows a system 436 of one or more tools 438, and an associated method 440 comprising various functions 442. As described in greater detail hereinafter, the functions may include abrading the junction, cleaning the junction, applying sealant, and inspecting the sealed junction, for example. Each tool 438 has the general feature that it can travel down the conduit and facilitate one or more of the indicated functions. The subsequent drawings and description provide an example mapping of tool to function; that mapping is provided for efficiency of description and should not be construed as limiting in any sense. At one extreme, all of the disclosed functions may be integrated into the very same tool. At the opposite extreme, each tool may provide only a single function. Between and including the two extremes is a combinatorial series of embodiments in which *N* functions are distributed among M tools in any practicable manner. In some implementations, the same function may be integrated redundantly into two or more tools, for operational flexibility.

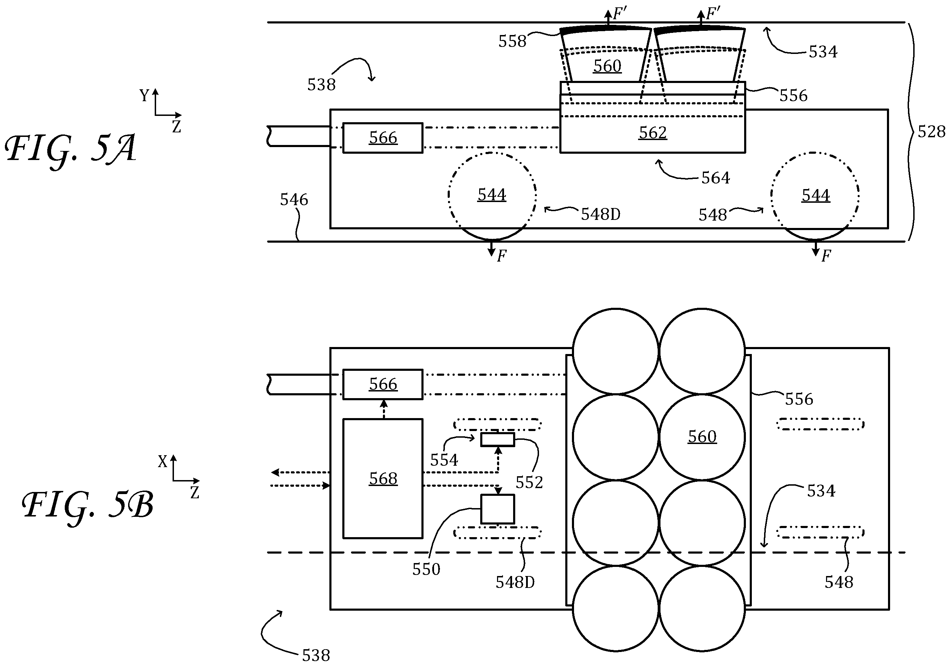

In that spirit, FIGS. 5A and 5B show aspects of an example tool 538 for reinforcing a junction of one or more aircraft components. As noted hereinabove, the one or more aircraft components include fiber composite. Individually or in combination, the one or more aircraft components form an elongate conduit 528.

Tool 538 includes one or more translational-bearing elements 544. Each translational-bearing element is configured to travel interior surface 546 of conduit 528, which is opposite junction 534. In examples in which conduit 528 is the same or similar to conduit 320 of FIG. 3 (*i.e.,* a conduit formed by coupling a hat stringer to an aircraft skin), interior surface 546 is the interior surface of the cap portion of the hat stringer, and junction 534 is a junction between the flange extensions of the hat stringer and the aircraft skin. The one or more translational-bearing elements of tool 538 support movement of the tool through the conduit. More particularly, each translational-bearing element is configured to slide, glide, or roll within the conduit. The configuration of the translational-bearing elements may vary from one example to another. In some examples, a translational-bearing element may comprise a low-friction slide, akin to a ski. In some examples, a translational-bearing element may comprise an air bearing that enables the tool to glide through the conduit on a cushion of compressed air.

In the illustrated example, each translational-bearing element 544 of tool 538 comprises a wheel 548. Four wheels are shown in FIG. 5B; at least one wheel 548D is a driven wheel, coupled mechanically to drive mechanism 550. In some examples, the drive mechanism may include a motor (*e.g.,* an electric or compressed-air driven motor) coupled to suitable reduction gears, rotational bearings, *etc.*

Tool 538 includes translation register 552. The translation register provides an output signal that varies in dependence on a distance of travel of tool 538 through conduit 528. In examples in which tool 538 is manually operated, output signal from the translation register may be reported to the operator of the tool. In examples in which tool 538 is operated via an electronic process controller *(vide infra),* the electronic process controller may be configured to receive the output signal from the translation register and thereby know the position of the tool within the conduit.

The configuration of translation register 552 is not particularly limited. In some examples, the translation register may include a physical measuring strip or wire attached to a point of reference at one end of the conduit. In some examples, the translation register may include an optical or acoustic time-of-flight or interferometric measurement device. In the illustrated example, the translation register includes a revolution counter 554, which outputs one or more pulses for each revolution of the connected wheel. With knowledge of the current position of tool 538 within conduit 528, the operator or electronic process controller can drive the tool to the location of an area of incomplete or uneven bonding within the conduit.

Continuing in FIGS. 5A and 5B, tool 538 includes a sealant applicator 556 configured to apply sealant 558 along junction 534, at the location of an area of incomplete or uneven bonding. In some examples, the sealant may comprise a polysulfide sealant. In the illustrated example, the sealant applicator includes a plurality of brushes 560. The size, number, and nature of the brushes are adapted to the particular junction to be reinforced, as is the manner in which the brushes are charged with sealant. In some examples, the brushes are charged manually by the operator before the tool is inserted into the conduit. In other examples, sealant may be pumped into the brushes from a sealant reservoir on-board the tool. The brushes may be stationary in some examples. In other examples, the brushes may be motorized to provide spinning and/or reciprocating movement.

Tool 538 includes a biasing element 562 arranged between translational-bearing elements 544 and sealant applicator 556. The biasing element is configured to controllably bias the sealant applicator against junction 534 by varying the distance of separation between the sealant applicator and the translational-bearing elements. When the biasing element is actuated, tool 538 exerts an upward force *F'* against junction 534 and a downward force *F* against interior surface 546, where *F* is the sum of *F'* and the weight of the tool. The configuration of the biasing element may vary from one example to another. In some examples, the biasing element may comprise an electromechanical (*e.g.,* solenoid-based) or pneumatic actuator, such as a linear actuator. In the illustrated example, biasing element 562 includes an air bladder 564. When tool 538 is to be moved through conduit 528 with no contact between brushes 560 and junction 534, the air bladder is maintained in a deflated state. When sealant 558 is to be brushed onto the junction at the current position of the tool, the air bladder is inflated and maintained in an inflated state.

In examples in which brush coating is enacted manually, the operator of the tool may manually inflate and deflate the air bladder as needed, using an off-board valve coupled fluidically to a pump or source of compressed air. In the example illustrated in FIG. 5, however, inflation and deflation of the air bladder is controlled via on-board actuator 566, in the form of an electronically controlled valve, also coupled fluidically to a pump or source of compressed air. In this example, the actuator is coupled operatively to electronic process controller 568. In a typical operating scenario, the electronic process controller is provided a target position of an area of incomplete or uneven bonding in junction 534, along conduit 528. In digital memory, the electronic process controller maintains its current position along the conduit. Based on the difference between the target position and the current position, the electronic process controller starts the tool moving in the appropriate direction, while periodically updating the current position based on the output of translation register 552. When the tool reaches a desired distance from the area of incomplete or uneven bonding, the electronic process controller energizes the actuator-*e.g*., to admit air into air bladder 564 and thereby extend brushes 560.

Recalling the configuration illustrated in FIG. 3, the reader will note that a given conduit may include two, parallel junctions opposing the same interior surface of the conduit (e.g., junctions 334A and 334B of FIG. 3B). Accordingly, tool 538 may be configured to concertedly brush coat both of the junctions opposing interior surface 546-*i.e*., the interior surface of the cap portion of the hat stringer-even if only one of the junctions exhibits incomplete or uneven bonding in the brush-coated area. The feature of processing both junctions in an area where an area of incomplete or uneven bonding is detected is extended also to the abrasion operation enacted via tool 738 *(vide infra).* In other implementations, the effect of a tool may be limited to the junction exhibiting the area of incomplete or uneven bonding along the indicated interval, as illustrated for tool 638 *(vide infra).*

Continuing now in FIG. 5, electronic process controller 568 may be coupled operatively to various actuators and components of tool 538. The electronic process controller may be coupled to drive mechanism 550, for instance. The electronic process controller may be coupled communicatively to a remote operator device (not shown in the drawings) outside conduit 528. The remote operator device may offer an operator interface through which the operator may control the tool and receive any data acquired by the tool. The tool and remote operator device may be coupled wirelessly or via a wired data link. Other functions of electronic process controller are described hereinafter.

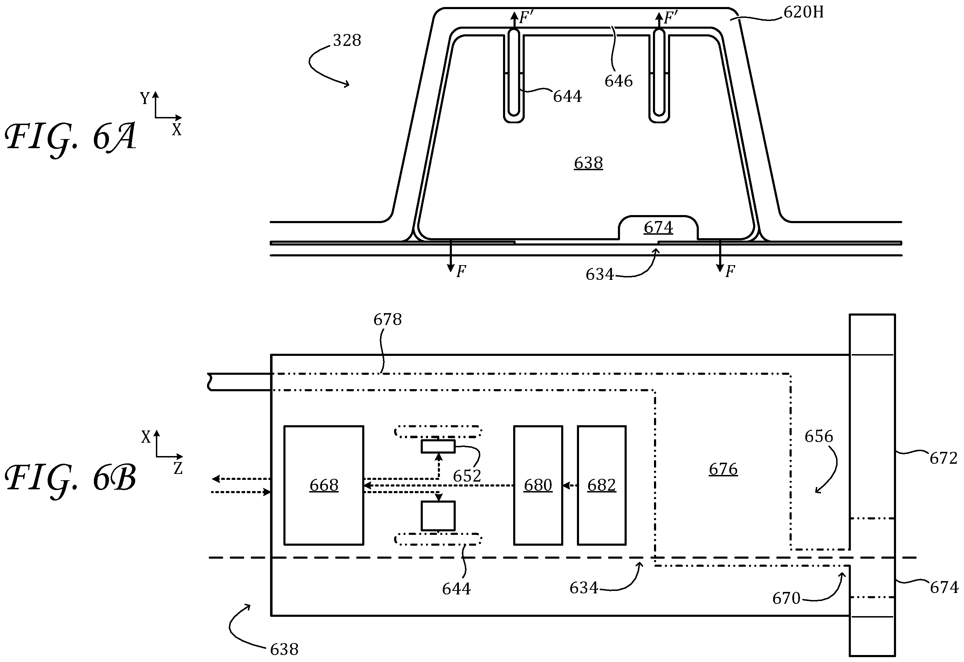

FIGS. 6A and 6B show aspects of another example tool 638 for reinforcing a junction 634 of one or more aircraft components. Like tool 538, tool 638 includes one or more translational-bearing elements 644, a translation register 652, a sealant applicator 656, and an electronic process controller 668. Sealant applicator 656 is configured differently, however, relative to the sealant applicator of tool 538. In particular, sealant applicator 656 is a bead applicator having a nozzle 670 for releasing a bead of the sealant. The sealant applicator has a blade 672 with an aperture 674 defining the cross section of the desired bead of sealant. As shown in FIG. 6A, blade 672 may be shaped to fit the interior cross section of conduit 628. The blade may comprise a fluorinated polymer (*e.g.,* ultra-high molecular-weight polyethylene, or, polytetrafluoroethylene) to reduce adhesion of the sealant onto the blade.

Sealant may be supplied to nozzle 670 in any suitable manner. In the example illustrated in FIG. 6B, the sealant is supplied from an on-board sealant reservoir 676. In the scenario in which a bead of sealant is to be applied to junction 634, the sealant is pushed out of the sealant reservoir and through nozzle 670 by compressed air supplied via compressed-air line 678. In other examples, the sealant may be pushed out of the reservoir mechanically, via a screw or ratchet mechanism. The sealant released from the nozzle fills aperture 674 as tool 638 continues to move through the conduit. In some examples, the aperture may be about 26 mm in width (*e.g.,* 13 mm on both sides of the area of incomplete or uneven bonding), corresponding to the desired width of the sealant bead. The thickness of the bead may be 2 mm or greater. In this manner, a sealant bead of the desired position, length, and cross section may be applied to any part of the junction-*e.g*., at the location of incomplete or uneven bonding. When sealant is released from nozzle 670, tool 638 exerts an upward force *F'* against interior surface 646 and a downward force *F* against junction 634, where F is the sum of *F'* and the weight of the tool.

Tool 638 also includes, as shown in FIG. 6B, a camera 680 and an illumination source 682. The illumination source is configured to illuminate junction 634. The camera is configured to acquire an image of the junction under illumination from the illumination source and to provide the image for real-time inspection of the sealed junction. To that end, the camera may be coupled operatively to electronic process controller 668, which conveys the image of the junction to the remote operator device.

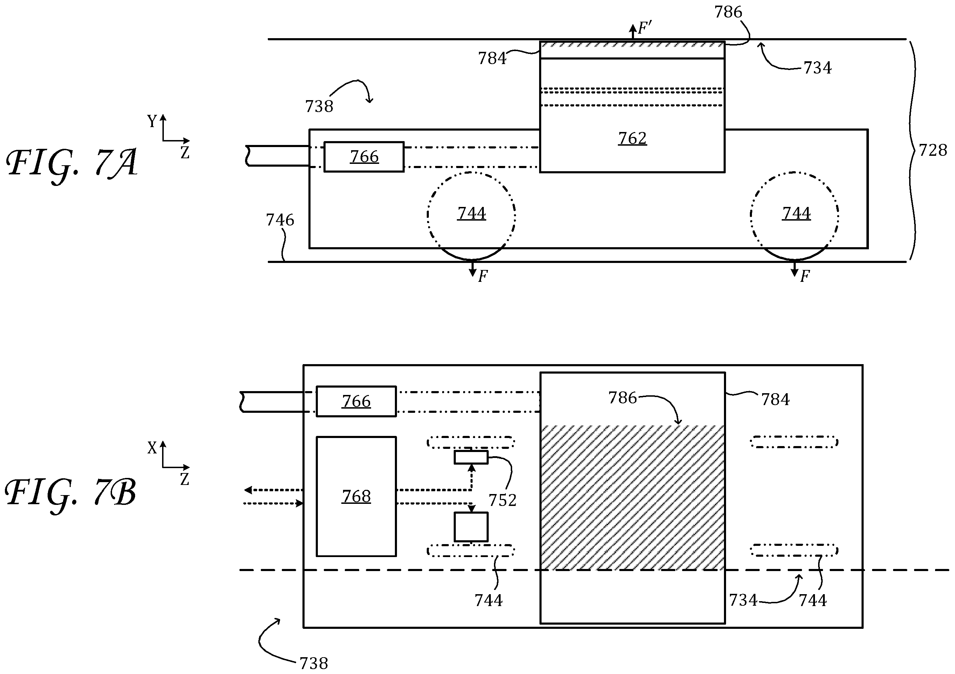

FIGS. 7A and 7B show aspects of another example tool 738 for reinforcing a junction of one or more aircraft components. Like tool 538, tool 738 includes one or more translational-bearing elements 744, a translation register 752, and a biasing element 762. Tool 738 also includes an abrasion element 784. The abrasion element may comprise sandpaper or another form of fixed, distributed grit. The grit may be fine grit-*e.g*., 100 to 200 mesh in some examples. The abrasion element is coupled to the biasing element, so that when the biasing element is activated the abrasion element makes contact with junction 734. When the biasing element is deactivated, the abrasion element is released from the junction. By controlling actuator 766 of the biasing element and concurrently driving the tool, the operator or electronic process controller can direct abrasion to a specified area of the junction. When the biasing element is actuated, tool 738 exerts an upward force *F'* against junction 734 and a downward force *F* against interior surface 746, where F is the sum of *F'* and the weight of the tool.

In some examples, repeated back-and-forth movement of the tool over the desired interval, with abrasion element 784 engaging junction 734, may provide sufficient abrasion to the area of incomplete or uneven bonding. In other examples, the stage on which the abrasion element is arranged may be a rotating or reciprocating stage, which amplifies the abrasion effect.

In some examples, the surface of the abrasion element that contacts the junction may be substantially planar. In other examples, the surface may be contoured to conform to the junction. Accordingly, in the illustrated example, abrasion element 784 has a raised middle section 786. The step height of the raised middle section corresponds to the thickness of flange extensions 732; the width of the raised middle section corresponds to the gap between the flange extensions in conduit 728.

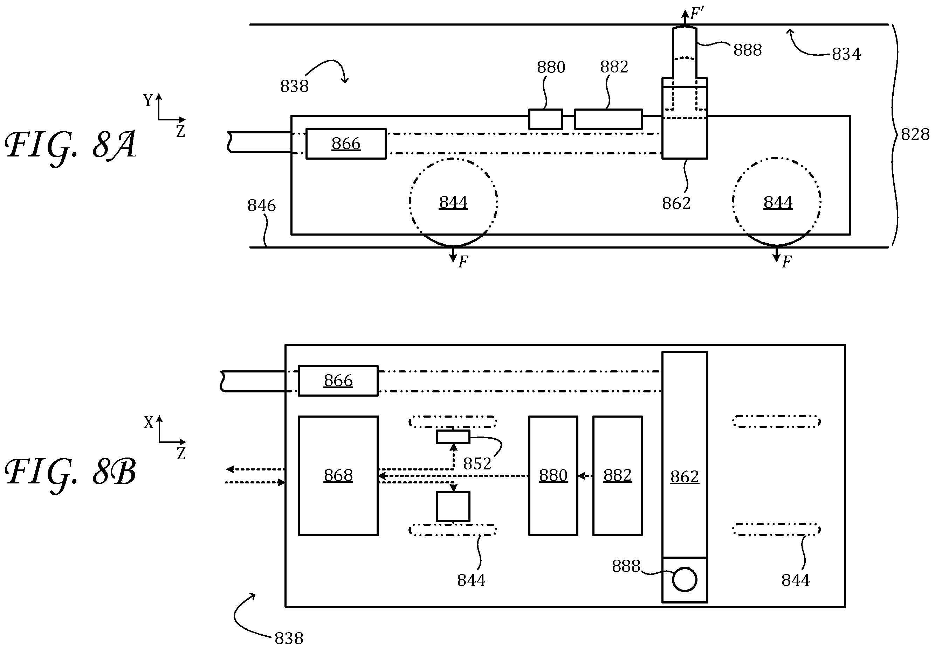

FIGS. 8A and 8B show aspects of an example tool 838 for inspecting a sealed junction of one or more aircraft components. Like tool 538, tool 838 includes one or more translational-bearing elements 844, a translation register 852, a biasing element 862, a camera 880, an illumination source 882, and an electronic process controller 868.

Tool 838 also includes a mechanical-testing element 888 configured for mechanically testing the integrity of the seal applied to junction 834. The shape and form of the mechanical-testing element are not particularly limited. In some examples, the mechanical-testing element is a mostly rigid structure with a soft, tacky tip, like a pencil eraser. The mechanical-testing element is coupled to the biasing element, so that when the biasing element is activated the tip makes contact with junction 734. When the biasing element is deactivated, the tip is released from the junction. Accordingly, when the biasing element is actuated, tool 838 exerts an upward force *F'* against junction 834 and a downward force *F* against interior surface 846, where *F* is the sum of *F'* and the weight of the tool. By controlling actuator 766 of the biasing element and concurrently moving the tool over the area of the junction that was sealed, the mechanical-testing element can be made to selectively rub on the sealed portion of the junction. By analyzing the image from camera 880, the operator or electronic process controller can determine whether any portion of the seal has lifted off of the junction pursuant to the rubbing.

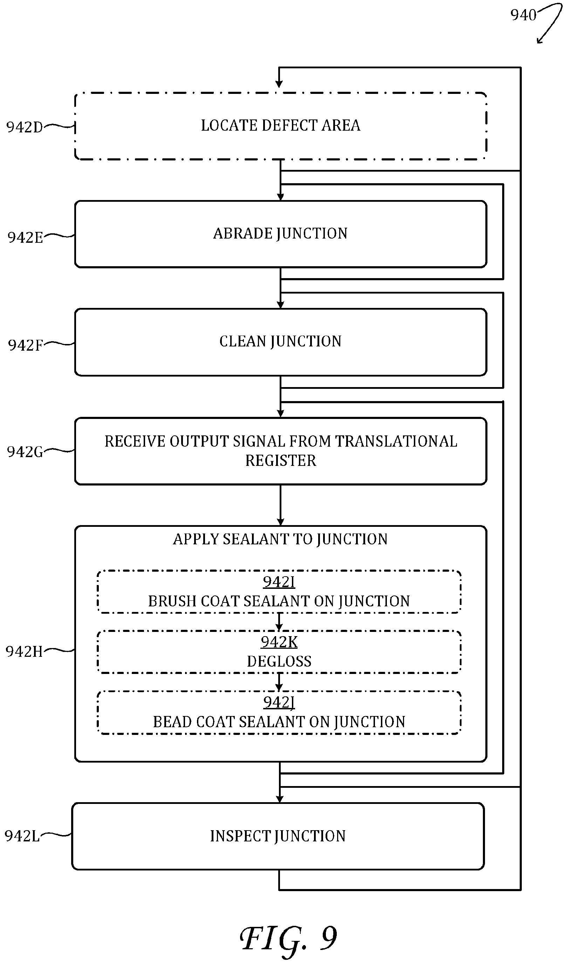

FIG. 9 shows aspects of an example method 940 to reinforce a junction of one or more aircraft components, the one or more aircraft components including fiber composite and forming an elongate conduit. For ease of understanding, the method is described with continued reference to the configurations hereinabove. It will be understood, however, that the method may be supported by other configurations as well.

At step 942D an area of incomplete or uneven bonding in the junction is located. The area can be located by imaging the conduit, plural conduits, or portions thereof, as examples. The imaging or other locating mechanism is calibrated to provide a reliable position reference, at least along the length of the conduit, and is detailed enough to reveal at least some of the internal structure of the conduit. In some examples the imaging comprises sonography-*e.g*., ultrasonic imaging. In other examples the imaging may comprise one or more diffraction techniques.

At 942E of method 940 the junction is abraded. In methods that include location of an area of incomplete or uneven bonding (*e.g.,* 942D of method 940), abrasion may be localized to the area. More specifically, if such an area extends from *Z*₁ to *Z*₂ on the right or left junction of the conduit, then an interval from *Z*₁ - δ to *Z*₂ + δ may be abraded. In some examples, the abrasion step may be enacted using a tool such as tool 738, having an abrasion element 784.

At 942F, subsequent to abrasion and prior to application of sealant, the junction is cleaned. Cleaning is done to remove grit and other particulates released in the abrasion. In some examples, the cleaning includes vacuum cleaning. In some examples the cleaning includes wiping with a cloth-*e.g.,* a particulate-trapping cloth. In some examples one or more moistened cloths may be used. Such moistened cloths may be moistened with water, a detergent solution, or a solvent. Suitable solvents include ketone solvents such as acetone, methylethyl ketone, and methylpropyl ketone, as non-limiting examples. In some examples the cleaning operation may be localized to the abraded area or areas of the conduit and may be enacted via a tool inserted down the conduit, akin to the tools described herein. In examples that involve wetting the interior of the conduit, the conduit is allowed to dry before processing is continued. Drying may be achieved by forcing air through the conduit, in some examples.

As noted hereinabove, any, some, or all of the functions of method 940 may be enacted via a system of tools that travel down the conduit to the location of an area of incomplete or uneven bonding. Furthermore, any, some, or all of the tools may include an electronic process controller that automates one or more of the functions. Automated travel of a tool to a position of incomplete or uneven bonding will now be described with reference to a sealant-application tool. It will be understood, however, that an analogous description applies equally to any of the other tools and functions.

At 942G of method 940, an electronic process controller of the sealant application tool receives a signal that varies in dependence on a distance of travel of the tool through the conduit. The signal may be the output of a translation register, such as translation register 552 or translation register 652. As noted above, the electronic process controller is provided a target position of an area of incomplete or uneven bonding in the junction along the conduit. The electronic process controller also maintains the current position of the tool within the conduit. Based on the difference between the target position and the current position, the electronic process controller starts the tool moving in the appropriate direction, while updating the current position based on the output of the translation register. When the tool reaches a desired distance from the incomplete or uneven bonding, the electronic process controller energizes the actuator that triggers application of the sealant.

At 942H, accordingly, sealant is applied along the junction from a tool moveable through the conduit. During sealant application the tool exerts force on the interior surface of the conduit opposite the junction. As noted hereinabove, the tool may be one of a plurality of tools moveable through the conduit and configured to exert force on the interior surface of the conduit opposite the junction. In the method of appended claim 1 that includes location of an area of incomplete or uneven bonding (*e.g.,* 942D of method 940), the sealant is applied to only the area or areas. The sealant may be applied along a suitable length interval, as described above in the context of the abrading operation.

In some examples, application of the sealant includes, as shown at 942I, brush coating a film of the sealant along the junction. In some examples, application of the sealant includes, as shown at 942J, laying a bead of the sealant. In some examples, the bead is lain subsequent to the brush coating. Accordingly, the bead may be lain over a film of sealant previously applied via brush coating. One advantage of the combined approach is that the brushing action helps to stir up particulates from abrasion (at 942E) that may remain on the junction even after cleaning (at 942F). Such particulates are thereby distributed into the bulk of the sealant, where they are less likely to compromise the quality of the seal than if left on the surface. Accordingly, when the sealant bead is subsequently applied, it is received onto a pristine surface, for reliable adhesion. In some examples the film may be allowed to fully or partially cure before the bead coating is enacted. In some examples, sealant application includes an intermediate deglossing step 942K between brush coating and bead coating, where, for example, a solvent-moistened cloth is wiped over the cured film prior to bead coating. In examples in which brush coating and bead coating are both used, the bead coating may be enacted by the same tool as the brush coating, or by a different tool. One or both of these steps may be controlled via an electronic process controller.

At 942L the junction is inspected after reinforcement. In some examples, inspection of the junction includes remotely inspecting an image of the junction. In some examples, inspection of the junction includes inspecting the quality of adhesion of the cured sealant to the junction via mechanical testing. Mechanical testing may be enacted using a mechanical-testing tool, such as tool 838.

This disclosure contemplates a scenario in which plural areas of incomplete or uneven bonding are located within a given conduit, and in which the various functions of abrading, cleaning, sealing, and inspecting the junction are performed iteratively over each of the areas. For example, after the sealant is applied, at 942H of method 940, the process flow returns to 942G, where the electronic process controller advances to the next area, continuing to receive output signal from the translation register and updating the position of the tool. In some examples, the area of incomplete or uneven bonding farthest from the conduit end through which the tool is inserted is sealed first. Thereafter the tool is backed out of the conduit, sealing the remaining areas as encountered. This strategy avoids a situation in which the tool has to be moved over uncured sealant. Method 940 also indicates iteration through plural areas for area location, abrasion, cleaning, and inspection steps. It will be noted, however, that a conduit may be cleaned all at once, in some examples.

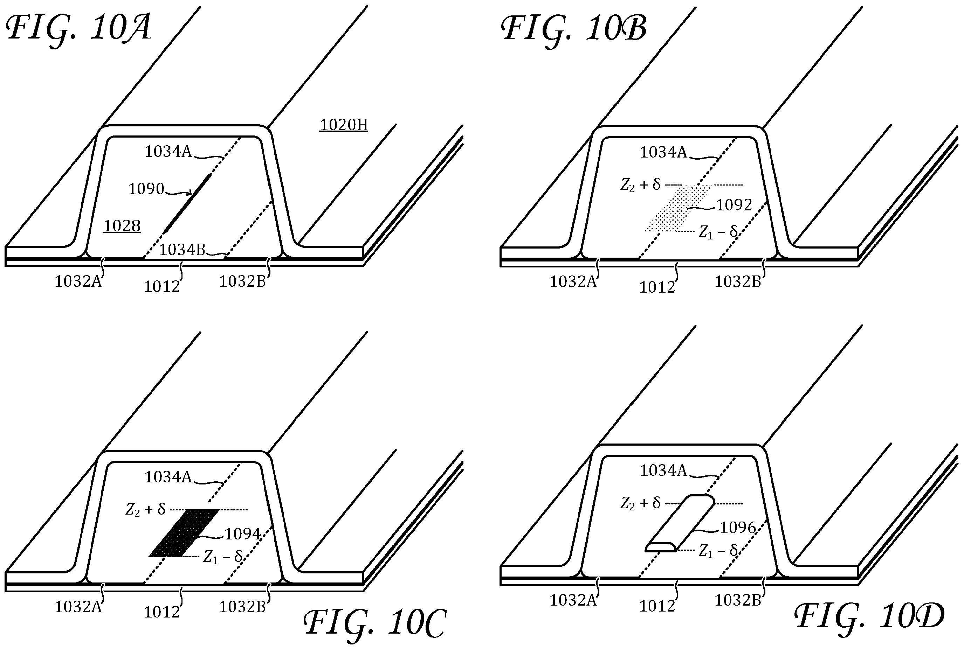

FIGS. 10A through 10D show aspects of an example junction 1034A in four different stages of reinforcement according to the method of FIG. 9. In these drawings, junction 1034A is one of two junctions, 1034A and 1034B of a conduit 1028 formed by bonding hat stringer 1020H to aircraft skin 1012. In this example, the interface between the hat stringer and the aircraft skin includes flange extensions 1032A and 1032B.

FIG. 10A shows an area of incomplete or uneven bonding 1090 located along junction 1034A. FIG. 10B shows abraded area 1092 comprising the interval from *Z*₁ - δ to *Z*₂ + δ along junction 1034A. FIG. 10C shows sealant film 1094, which is brush coated onto substantially the same interval. FIG. 10D shows a bead 1096 of sealant laid on top of the cured sealant film.

No aspect of the foregoing drawings or description should be understood in a limiting sense, because numerous variations, extensions, and omissions are also envisaged within the scope of the appended claims. For instance, while tools having on-board drive mechanisms are emphasized above, a tool fixed to the end of a pushrod also falls within the scope of this disclosure. In such examples, the pushrod may be actuated via an electronic process controller located outside of the conduit, or actuated directly by a human operator. The tools illustrated in FIGS. 5A through 8B are non-limiting examples of tools represented in FIG. 4, but additional tools that travel along a conduit may also be included in system 436-a tool configured to clean the conduit between the abrasion and brush-coating operations, for instance. Although the illustrated examples show reinforcement of conduits formed in the wing of an aircraft between hat stringers and the aircraft skin, conduits comprising other types of stiffener members are also envisaged, in addition to conduits that are not necessarily part of any airframe.

This disclosure is presented by way of example. Components, process steps, and other elements that may be substantially the same in one or more of the figures are identified coordinately and described with minimal repetition. It will be noted, however, that elements identified coordinately may also differ to some degree. It will be further noted that the figures are schematic and generally not drawn to scale. Rather, the various drawing scales, aspect ratios, and numbers of components shown in the figures may be purposely distorted to make certain features or relationships easier to see.

It will be understood that the configurations and/or approaches described herein are exemplary in nature, and that these specific embodiments or examples are not to be considered in a limiting sense, because numerous variations are possible within the scope of the appended claims. The specific routines or processes described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A method (440, 940) to reinforce a junction (334, 534, 634, 734, 834, 1034) of one or more aircraft components, the one or more aircraft components including fiber composite and forming an elongate conduit (328, 528, 628, 728, 828, 1028), the method comprising:
locating (942D) an area (1090) of incomplete or uneven bonding in the junction,
locally abrading (942E) the area (1090) of the junction; and
locally applying (942H) sealant (558) at the location of the area (1092) of the junction from a tool (438, 538, 638) moveable through the conduit, the tool exerting force on an interior surface (546, 646, 746, 846) of the conduit opposite the junction.

2. The method of claim 1 wherein applying the sealant includes brush coating (942I) the sealant.

3. The method of any one of claims 1 to 2 wherein applying the sealant includes laying (942J) a bead (1096) of the sealant, the method further comprising:
bead coating a bead (1096) of the sealant over a sealant film, from a tool (638) moveable through the conduit (328, 528, 628, 728, 828, 1028), the tool exerting force on an interior surface of the conduit opposite the junction (334, 534, 634, 734, 834, 1034); and
wherein the bead coating is controlled via an electronic process controller (568, 668, 768, 868), the method further comprising receiving (942G) in the electronic process controller a signal that varies in dependence on a distance of travel of the tool through the conduit.

4. The method of any one of claims 1 to 3 wherein the conduit (328, 528, 628, 728, 828, 1028) includes a hat stringer (320H, 620H, 1020H) of an aircraft wing (106).

5. The method of any one of claims 1 to 4 wherein at least one of the aircraft components includes carbon fiber, and wherein the sealant includes a polysulfide resin.

6. The method of any one of claims 1 to 5 wherein the tool is one of a plurality of tools moveable through the conduit (328, 528, 628, 728, 828, 1028) and configured to exert force on the interior surface of the conduit opposite the junction (334, 534, 634, 734, 834, 1034).

7. The method of any one of claims 1 to 6, wherein the area of incomplete or uneven bonding (1090) of the junction (334, 534, 634, 734, 834, 1034) is located by imaging the conduit (328, 528, 628, 728, 828, 1028).

8. The method of any one of claims 1 to 7 further comprising inspecting (942L) the junction (334, 534, 634, 734, 834, 1034) after reinforcement, including one or both of:
remotely inspecting an image of the junction; and
inspecting adhesion of cured sealant to the junction via mechanical testing.

9. A tool (438, 538, 638) for reinforcing a junction (334, 534, 634, 734, 834, 1034) of one or more aircraft components, the one or more aircraft components including fiber composite and forming an elongate conduit (328, 528, 628, 728, 828, 1028), the tool comprising:
a translational-bearing element (544, 644, 744, 844) configured to travel an interior surface (546, 646, 746, 846) of the conduit opposite the junction to support movement of the tool through the conduit; and
a sealant applicator (556, 656) configured to apply sealant (558) along the junction at a location of an area of incomplete or uneven bonding of the junction,
wherein the tool further comprises a translation register (552, 652, 752, 852) providing a signal that varies in dependence on a distance of travel of the tool through the conduit (328, 528, 628, 728, 828, 1028).

10. The tool (438, 538, 638) of claim 9 wherein the translational-bearing element includes a wheel (548), and further comprising a drive mechanism (550) configured to drive the wheel.

11. The tool (438, 538, 638) of any one of claims 9 to 10 wherein the sealant applicator includes a bead applicator (656) having a nozzle (670) for releasing a bead (1096) of the sealant and a profile (674) defining a cross section of the bead.

12. The tool (438, 538, 638) of any one of claims 9 to 11 further comprising a biasing element (562, 762, 862) arranged between the translational-bearing element and the sealant applicator and configured to controllably bias the sealant applicator against the junction by varying a distance of separation between the sealant applicator and the translational-bearing element.

13. The tool (438, 538, 638) of any one of claims 9 to 12 further comprising:
an illumination source (682, 882) configured to illuminate the junction; and
a camera (680, 880) configured to acquire an image of the junction under illumination from the illumination source and to provide the image for real-time inspection.

14. The tool (438, 538, 638) of claim 12 further comprising an electronic process controller (568, 668, 768, 868) coupled operatively to an actuator (566, 656, 756, 856) of the biasing element (562, 762, 862).

15. The tool (438, 538, 638) of claim 12, wherein the biasing element (562, 762, 862) includes an air bladder (564).

## Patentansprüche

1. Verfahren (440, 940) zum Verstärken einer Verbindung (334, 534, 634, 734, 834, 1034) einer oder mehrerer Flugzeugkomponenten, wobei die eine oder die mehreren Flugzeugkomponenten einen Faserverbund aufweisen und ein längliches Rohr (328, 528, 628, 728, 828, 1028) bilden, wobei das Verfahren aufweist:
Lokalisieren (942D) einer unvollständigen oder ungleichmäßigen Verklebungsfläche (1090) in der Verbindung,
lokales Abtragen (942E) der Fläche (1090) der Verbindung; und
lokales Auftragen (942H) eines Dichtungsmittels (558) aus einem durch das Rohr bewegbaren Werkzeug (438, 538, 638) an dem Ort der Fläche (1092) der Verbindung, wobei das Werkzeug eine Kraft auf eine der Verbindung gegenüberliegende Innenfläche (546, 646, 746, 846) des Rohrs ausübt.

2. Verfahren nach Anspruch 1, wobei Auftragen des Dichtungsmittels ein Bürstenstreichen (9421) des Dichtungsmittels aufweist.

3. Verfahren nach einem der Ansprüche 1 bis 2, wobei Auftragen des Dichtungsmittels ein Ablegen (942J) einer Perle (1096) des Dichtungsmittels aufweist, wobei das Verfahren ferner aufweist:
Streichen einer Perle (1096) des Dichtungsmittels aus einem durch das Rohr (328, 528, 628, 728, 828, 1028) bewegbaren Werkzeug (638) über einen Dichtungsmittelfilm, wobei das Werkzeug eine Kraft auf eine der Verbindung (334, 534, 634, 734, 834, 1034) gegenüberliegende Innenfläche des Rohrs ausübt;
wobei das Streichen der Perle durch eine elektronische Prozesssteuerung (568, 668, 768, 868) gesteuert wird, wobei das Verfahren ferner aufweist: Empfangen (942G) eines Signals, das in Abhängigkeit von einer Fahrstrecke des Werkzeugs durch das Rohr variiert, in der elektronischen Prozesssteuerung.

4. Verfahren nach einem der Ansprüche 1 bis 3, wobei das Rohr (328, 528, 628, 728, 828, 1028) einen Hat-Stringer (320H, 620H, 1020H) eines Flugzeugflügels (106) aufweist.

5. Verfahren nach einem der Ansprüche 1 bis 4, wobei mindestens eine der Flugzeugkomponenten Kohlenstofffaser aufweist, und wobei das Dichtungsmittel ein Polysulfid-Harz aufweist.

6. Verfahren nach einem der Ansprüche 1 bis 5, wobei das Werkzeug eines von mehreren Werkzeugen ist, die durch das Rohr (328, 528, 628, 728, 828, 1028) bewegbar sind und konfiguriert sind, eine Kraft auf die der Verbindung (334, 534, 634, 734, 834, 1034) gegenüberliegende Innenfläche des Rohrs auszuüben.

7. Verfahren nach einem der Ansprüche 1 bis 6, wobei die unvollständige oder ungleichmäßige Verklebungsfläche (1090) der Verbindung (334, 534, 634, 734, 834, 1034) durch Abbilden des Rohrs (328, 528, 628, 728, 828, 1028) lokalisiert wird.

8. Verfahren nach einem der Ansprüche 1 bis 7, ferner aufweisend ein Inspizieren (942L) der Verbindung (334, 534, 634, 734, 834, 1034) nach Verstärkung, einschließlich:
Ferninspektion eines Bilds der Verbindung; und/oder
Inspizieren einer Haftung des ausgehärteten Dichtungsmittels an der Verbindung mittels mechanischer Prüfung.

9. Werkzeug (438, 538, 638) zum Verstärken einer Verbindung (334, 534, 634, 734, 834, 1034) einer oder mehrerer Flugzeugkomponenten, wobei die eine oder die mehreren Flugzeugkomponenten einen Faserverbund aufweisen und ein längliches Rohr (328, 528, 628, 728, 828, 1028) bilden, wobei das Werkzeug aufweist:
ein translatorisch wirkendes Element (544, 644, 744, 844), das konfiguriert ist, eine der Verbindung gegenüberliegende Innenfläche (546, 646, 746, 846) des Rohrs zu befahren, um eine Bewegung des Werkzeugs durch das Rohr zu unterstützen; und
einen Dichtungsmittel-Applikator (556, 656), der konfiguriert ist, Dichtungsmittel (558) entlang der Verbindung an einem Ort einer unvollständigen oder ungleichmäßigen Verklebungsfläche der Verbindung aufzutragen,
wobei das Werkzeug ferner ein Translationsregister (552, 652, 752, 852) aufweist, das ein Signal bereitstellt, das in Abhängigkeit von einer Fahrstrecke des Werkzeugs durch das Rohr (328, 528, 628, 728, 828, 1028) variiert.

10. Werkzeug (438, 538, 638) nach Anspruch 9, wobei das translatorisch wirkende Element ein Rad (548) aufweist, und ferner aufweisend einen Antriebsmechanismus (550), der konfiguriert ist, das Rad anzutreiben.

11. Werkzeug (438, 538, 638) nach einem der Ansprüche 9 bis 10, wobei der Dichtungsmittel-Applikator einen Perle-Applikator (656) aufweist, der eine Düse (670) zum Freisetzen einer Perle (1096) des Dichtungsmittels und ein eine Querschnittsfläche der Perle definierendes Profil (674) hat.

12. Werkzeug (438, 538, 638) nach einem der Ansprüche 9 bis 11, ferner aufweisend ein Vorspannungselement (562, 762, 862), das zwischen dem translatorisch wirkenden Element und dem Dichtungsmittel-Applikator angeordnet ist und konfiguriert ist, durch Variieren einer Separationsdistanz zwischen dem Dichtungsmittel-Applikator und dem translatorisch wirkenden Element den Dichtungsmittel-Applikator auf steuerbare Weise gegen die Verbindung vorzuspannen.

13. Werkzeug (438, 538, 638) nach einem der Ansprüche 9 bis 12, ferner aufweisend:
eine Beleuchtungsquelle (682, 882), die konfiguriert ist, die Verbindung zu beleuchten; und
eine Kamera (680, 880), die konfiguriert ist, unter Beleuchtung aus der Beleuchtungsquelle ein Bild der Verbindung aufzunehmen und das Bild für Echtzeit-Inspektion bereitzustellen.

14. Werkzeug (438, 538, 638) nach Anspruch 12, ferner aufweisend eine elektronische Prozesssteuerung (568, 668, 768, 868), die operativ mit einem Aktuator (566, 656, 756, 856) des Vorspannungselements (562, 762, 862) gekoppelt ist.

15. Werkzeug (438, 538, 638) nach Anspruch 12, wobei das Vorspannungselement (562, 762, 862) eine Luftblase (564) aufweist.

## Revendications

1. Procédé (440, 940) pour renforcer une jonction (334, 534, 634, 734, 834, 1034) d'une ou de plusieurs pièces d'aéronef, les une ou plusieurs pièces d'aéronef comprenant un composite à base de fibres et formant un conduit (328, 528, 628, 728, 828, 1028) allongé, le procédé comprenant :
la localisation (942D) d'une zone (1090) de fixation incomplète ou irrégulière dans la jonction,
l'abrasion de manière locale (942E) de la zone (1090) de la j onction ; et
l'application de manière locale (942H) d'un produit d'étanchéité (558) à l'emplacement de la zone (1092) de la jonction à partir d'un outil (438, 538, 638) mobile à travers le conduit, l'outil exerçant une force sur une surface intérieure (546, 646, 746, 846) du conduit à l'opposé de la jonction.

2. Procédé selon la revendication 1 dans lequel l'application du produit d'étanchéité comprend l'enduction à la brosse (9421) du produit d'étanchéité.

3. Procédé selon l'une quelconque des revendications 1 et 2 dans lequel l'application du produit d'étanchéité comprend la disposition (942J) d'un bourrelet (1096) du produit d'étanchéité, le procédé comprenant en outre :
l'enduction par bourrelet d'un bourrelet (1096) du produit d'étanchéité sur un film d'étanchéité, à partir d'un outil (638) mobile à travers le conduit (328, 528, 628, 728, 828, 1028), l'outil exerçant une force sur une surface intérieure du conduit à l'opposé de la jonction (334, 534, 634, 734, 834, 1034) ; et
dans lequel l'enduction par bourrelet est commandée via un contrôleur de processus électronique (568, 668, 768, 868), le procédé comprenant en outre la réception (942G) dans le contrôleur de processus électronique d'un signal qui varie en fonction d'une distance de déplacement de l'outil à travers le conduit.

4. Procédé selon l'une quelconque des revendications 1 à 3 dans lequel le conduit (328, 528, 628, 728, 828, 1028) comprend une lisse en forme de chapeau (320H, 620H, 1020H) d'une voilure d'aéronef (106).

5. Procédé selon l'une quelconque des revendications 1 à 4 dans lequel au moins une parmi les pièces d'aéronef comprend une fibre de carbone, et dans lequel le produit d'étanchéité comprend une résine de polysulfure.

6. Procédé selon l'une quelconque des revendications 1 à 5 dans lequel l'outil est un d'une pluralité d'outils mobiles à travers le conduit (328, 528, 628, 728, 828, 1028) et configurés pour exercer une force sur la surface intérieure du conduit à l'opposé de la jonction (334, 534, 634, 734, 834, 1034).

7. Procédé selon l'une quelconque des revendications 1 à 6, dans lequel la zone (1090) de fixation incomplète ou irrégulière de la jonction (334, 534, 634, 734, 834, 1034) est localisée par imagerie du conduit (328, 528, 628, 728, 828, 1028).

8. Procédé selon l'une quelconque des revendications 1 à 7 comprenant en outre l'inspection (942L) de la jonction (334, 534, 634, 734, 834, 1034) après un renforcement, comprenant une ou les deux parmi :
l'inspection à distance d'une image de la jonction ; et
l'inspection de l'adhésion d'un produit d'étanchéité durci à la jonction via un essai mécanique.

9. Outil (438, 538, 638) pour renforcer une jonction (334, 534, 634, 734, 834, 1034) d'une ou de plusieurs pièces d'aéronef, les une ou plusieurs pièces d'aéronef comprenant un composite à base de fibres et formant un conduit (328, 528, 628, 728, 828, 1028) allongé, l'outil comprenant :
un élément porteur en translation (544, 644, 744, 844) configuré pour se déplacer sur une surface intérieure (546, 646, 746, 846) du conduit à l'opposé de la jonction pour supporter un mouvement de l'outil à travers le conduit ; et
un applicateur de produit d'étanchéité (556, 656) configuré pour appliquer un produit d'étanchéité (558) le long de la jonction à un emplacement d'une zone de fixation incomplète ou irrégulière de la jonction,
dans lequel l'outil comprend en outre un registre de translation (552, 652, 752, 852) fournissant un signal qui varie en fonction d'une distance de déplacement de l'outil à travers le conduit (328, 528, 628, 728, 828, 1028).

10. Outil (438, 538, 638) selon la revendication 9 dans lequel l'élément porteur en translation comprend une roue (548), et comprenant en outre un mécanisme d'entraînement (550) configuré pour entraîner la roue.

11. Outil (438, 538, 638) selon l'une quelconque des revendications 9 à 10 dans lequel l'applicateur de produit d'étanchéité comprend un applicateur de bourrelet (656) ayant une buse (670) pour faire sortir un bourrelet (1096) du produit d'étanchéité et un profil (674) définissant une coupe transversale du bourrelet.

12. Outil (438, 538, 638) selon l'une quelconque des revendications 9 à 11 comprenant en outre un élément de déviation (562, 762, 862) agencé entre l'élément porteur en translation et l'applicateur de produit d'étanchéité et configuré pour dévier de manière contrôlable l'applicateur de produit d'étanchéité contre la jonction en faisant varier une distance de séparation entre l'applicateur de produit d'étanchéité et l'élément porteur en translation.

13. Outil (438, 538, 638) selon l'une quelconque des revendications 9 à 12 comprenant en outre :
une source d'éclairage (682, 882) configurée pour éclairer la j onction ; et
une caméra (680, 880) configurée pour acquérir une image de la jonction sous un éclairage provenant de la source d'éclairage et pour fournir l'image pour une inspection en temps réel.

14. Outil (438, 538, 638) selon la revendication 12 comprenant en outre un contrôleur de processus électronique (568, 668, 768, 868) couplé de manière fonctionnelle à un actionneur (566, 656, 756, 856) de l'élément de déviation (562, 762, 862).

15. Outil (438, 538, 638) selon la revendication 12, dans lequel l'élément de déviation (562, 762, 862) comprend une vessie d'air (564).
